# EUROPEAN PATENT APPLICATION

(11) **EP 2 963 921 A1**
(43) Date of publication of application: **06.01.2016**
(21) Application number: 14847828.2
(22) Date of filing: 01.07.2014
(51) Int. Cl.: H04N 7/15

(54) **MULTI-TERMINAL CONFERENCE COMMUNICATION PROCESSING METHOD AND APPARATUS**

(30) Priority: 29.09.2013 CN 201310454915
(71) Applicant: Huawei Technologies Co., Ltd., Longgang District Shenzhen, Guangdong 518129 (CN)
(72) Inventor: SUN, Zhe, Shenzhen Guangdong 518129 (CN)
(74) Representative: Epping - Hermann - Fischer
(86) International application number: PCT/CN2014/081392
(87) International publication number: WO 2015/043272

(57) **Abstract**

Embodiments of the present invention provide a method and an apparatus for processing multi-terminal conference communication. The method includes: receiving, by a server, a first participant picture sent by a conference terminal, and acquiring, according to the first participant picture, attribute information of a participant indicated by the picture; performing categorization on the participant according to the attribute information of the participant; and sending categorization information after the categorization to a switcher, so that the switcher performs a categorical arrangement on a conference image according to the categorization information and a category selection instruction that is sent by the conference terminal, and pushes the image after the categorical arrangement to the conference terminal, where the conference image includes images uploaded by multiple conference terminals. In a conference process, participants can be displayed in different categories according to a requirement of the conference terminal, and each participant can flexibly select an image arrangement manner according to a requirement, so that a video conference is implemented in a more user-friendly manner, and conference quality is further improved.

## Description

### TECHNICAL FIELD

The present invention relates to communications technologies, and in particular, to a method and an apparatus for processing multi-terminal conference communication.

### BACKGROUND

A multipoint remote video conference system refers to a system in which individuals or groups in two or more different places transfer sound, image, and file data to each other by using transmission lines and multimedia devices, that is, a person who participates in a conference can give an opinion by using a video, and at the same time observe images, actions, expressions, and the like of other participants on the video, thereby implementing instant and interactive communication, and completing an objective of the conference. The system is a typical image and language communication.

In the prior art, in a multipoint remote video conference, a participant can see all other participants on a display device of the participant. Attribute information such as departments, positions, and project groups of these participants may be all different. One or more participants who possess a particular attribute may give an opinion according to a need of the conference. In particular, multiple participants that have a particular attribute may speak at the same time.

However, by means of the prior art, a participant looks for a current speaker only on a display device that includes all participants, and the conference system can neither flexibly display and focus on the current speaker according to a need of the participant nor display other participants who share a common attribute with the current speaker according to a requirement of the conference.

### SUMMARY

The present invention provides a method and an apparatus for processing multi-terminal conference communication, to solve a problem that in an existing video conference, a speaker and a speaker who shares a common attribute with the speaker cannot be flexibly displayed according to a need of a participant.

A first aspect of embodiments of the present invention provides a method for processing multi-terminal conference communication, including:
receiving, by a server, a first participant picture sent by a conference terminal, and acquiring, according to the first participant picture, attribute information of a participant indicated by the picture;
performing, by the server, categorization on the participant according to the attribute information of the participant; and
sending, by the server, categorization information after the categorization to a switcher, so that the switcher performs a categorical arrangement on a conference image according to the categorization information and a category selection instruction that is sent by the conference terminal, and pushes the image after the categorical arrangement to the conference terminal, where the conference image includes images uploaded by multiple conference terminals.

With reference to the first aspect, in a first possible implementation manner of the first aspect, the sending, by the server, categorization information after the categorization to a switcher includes:
receiving, by the server, a second participant picture that is captured from a participant image uploaded by the conference terminal to the switcher and that is sent by the switcher and a matching instruction message;
performing, by the server, matching between the first participant picture and the second participant picture according to the matching instruction; and
when finding the first participant picture indicating a participant that is the same as a participant indicated by the second participant picture, marking, by the server, the second participant picture with the categorization information of the participant, and returning the second participant picture marked with the categorization information to the switcher.

With reference to the first possible implementation manner of the first aspect, in a second possible implementation manner of the first aspect, the receiving, by a server, a first participant picture sent by a conference terminal includes:
receiving, by the server, the first participant picture that is acquired by the conference terminal by using a camera apparatus and that is sent by the conference terminal.

With reference to the first possible implementation manner of the first aspect, in a third possible implementation manner of the first aspect, the receiving, by a server, a first participant picture sent by a conference terminal includes:
receiving, by the server, the first participant picture that is acquired by the conference terminal according to participant identity identification information and that is sent by the conference terminal.

With reference to the second possible implementation manner or the third possible implementation manner of the first aspect, in a fourth possible implementation manner of the first aspect, the receiving, by a server, a first participant picture sent by a conference terminal, and acquiring, according to the first participant picture, attribute information of a participant indicated by the picture includes:
performing, by the server, participant identity verification according to the first participant picture; and
acquiring, by the server according to a participant identity verification result, the attribute information of the participant indicated by the picture.

A second aspect of embodiments of the present invention provides a method for processing multi-terminal conference communication, including:
receiving, by a switcher, participant categorization information sent by a server;
receiving, by the switcher, a category selection instruction sent by a conference terminal;
performing, by the switcher, a categorical arrangement on a conference image according to the categorization information and the category selection instruction, where the conference image includes images uploaded by multiple conference terminals; and
pushing, by the switcher, the image after the categorical arrangement to the conference terminal.

With reference to the second aspect, in a first possible implementation manner of the second aspect, the method further includes: receiving, by the switcher, an image uploaded by the conference terminal.

With reference to the first possible implementation manner of the second aspect, in a second possible implementation manner of the second aspect, the receiving, by a switcher, participant categorization information sent by a server includes:
capturing, by the switcher, a second participant picture from the image uploaded by the conference terminal;
sending, by the switcher, the second participant picture and a matching instruction message to the server, so that the server performs, according to the matching instruction message, matching between the second participant picture and the first participant picture that is sent by the conference terminal, and when finding the first participant picture indicating a participant that is the same as a participant indicated by the second participant picture, marks the second participant picture with the categorization information of the participant; and
receiving, by the switcher, the second participant picture that is marked with the categorization information and that is sent by the server.

With reference to the second possible implementation manner of the second aspect, in a third possible implementation manner of the second aspect, after the receiving, by the switcher, the second participant picture that is marked with the categorization information and that is sent by the server, the method further includes:
marking, by the switcher, the second participant picture marked with the categorization information with a source address of the second participant picture.

With reference to the second aspect, in a fourth possible implementation manner of the second aspect, the method further includes:
receiving, by the switcher, a single-conference-object selection instruction sent by the conference terminal, where the single-conference-object selection instruction is used to request a conference with a single specified participant; and
pushing, by the switcher, an image of the specified participant to the conference terminal according to the single-conference-object selection instruction.

A third aspect of embodiments of the present invention provides an apparatus for processing multi-terminal conference communication, including:
a receiving module, configured to receive a first participant picture sent by a conference terminal, and acquire, according to the first participant picture, attribute information of a participant indicated by the picture;
a categorizing module, configured to perform categorization on the participant according to the attribute information of the participant; and
a sending module, configured to send categorization information after the categorization to a switcher, so that the switcher performs a categorical arrangement on a conference image according to the categorization information and a category selection instruction that is sent by the conference terminal, and pushes the image after the categorical arrangement to the conference terminal, where the conference image includes images uploaded by multiple conference terminals.

With reference to the third aspect, in a first possible implementation manner of the third aspect, the sending module includes:
a receiving unit, configured to receive a second participant picture that is captured from a participant image uploaded by the conference terminal to the switcher and that is sent by the switcher and a matching instruction message;
a matching unit, configured to perform matching between the first participant picture and the second participant picture according to the matching instruction; and
a sending unit, configured to: when the first participant picture indicating a participant that is the same as a participant indicated by the second participant picture is found, mark the second participant picture with the categorization information of the participant, and return the second participant picture marked with the categorization information to the switcher.

With reference to the first possible implementation manner of the third aspect, in a second possible implementation manner of the third aspect, the receiving module is specifically configured to receive the first participant picture that is acquired by the conference terminal by using a camera apparatus and that is sent by the conference terminal.

With reference to the first possible implementation manner of the third aspect, in a third possible implementation manner of the third aspect, the receiving module is specifically configured to receive the first participant picture that is acquired by the conference terminal according to participant identity identification information and that is sent by the conference terminal.

With reference to the second possible implementation manner or the third possible implementation manner of the third aspect, in a fourth possible implementation manner of the third aspect, the receiving module is specifically configured to perform participant identity verification according to the first participant picture; and acquire, according to a participant identity verification result, the attribute information of the participant indicated by the picture.

A fourth aspect of embodiments of the present invention provides an apparatus for processing multi-terminal conference communication, including:
a receiving module, configured to receive participant categorization information sent by a server; and receive a category selection instruction sent by a conference terminal;
an arranging module, configured to perform a categorical arrangement on a conference image according to the categorization information and the category selection instruction, where the conference image includes images uploaded by multiple conference terminals; and
a sending module, configured to push the image after the categorical arrangement to the conference terminal.

With reference to the fourth aspect, in a first possible implementation manner of the fourth aspect, the receiving module is further configured to receive an image uploaded by the conference terminal.

With reference to the first possible implementation manner of the fourth aspect, in a second possible implementation manner of the fourth aspect, the receiving module includes:
a capturing unit, configured to capture a second participant picture from the image uploaded by the conference terminal;
a sending unit, configured to send the second participant picture and a matching instruction message to the server, so that the server performs, according to the matching instruction message, matching between the second participant picture and the first participant picture that is sent by the conference terminal, and when finding the first participant picture indicating a participant that is the same as a participant indicated by the second participant picture, marks the second participant picture with the categorization information of the participant; and
a receiving unit, configured to receive the second participant picture that is marked with the categorization information and that is sent by the server.

With reference to the second possible implementation manner of the fourth aspect, in a third possible implementation manner of the fourth aspect, the apparatus further includes:
a processing module, configured to mark the second participant picture marked with the categorization information with a source address of the second participant picture.

With reference to the fourth aspect, in a fourth possible implementation manner of the fourth aspect, the receiving module is further configured to receive a single-conference-object selection instruction sent by the conference terminal, where the single-conference-object selection instruction is used to request a conference with a single specified participant; and
the sending module is further configured to push an image of the specified participant to the conference terminal according to the single-conference-object selection instruction.

In the embodiments of the present invention, a server receives a first participant picture sent by a conference terminal, and acquires, according to the picture, attribute information of a participant indicated by the picture; in this way, the server may perform categorization on the participant according to the attribute information, and after receiving the categorization information, a switcher may perform a categorical arrangement on a conference image according to a selection of the conference terminal, and push the conference image after the categorical arrangement to the conference terminal. In this way, in a conference process, participants can be displayed in different categories according to a requirement of the conference terminal, and each participant can flexibly select an image arrangement manner according to a requirement, so that a video conference is implemented in a more user-friendly manner, thereby making the multi-terminal video conference more flexible, improving experience of the participants, and further improving conference quality.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of a scenario of Embodiment 1 of a method for processing multi-terminal conference communication according to the present invention;
FIG. 2 is a schematic flowchart of Embodiment 2 of a method for processing multi-terminal conference communication according to the present invention;
FIG. 3 is a schematic flowchart of Embodiment 3 of a method for processing multi-terminal conference communication according to the present invention;
FIG. 4 is a schematic flowchart of Embodiment 4 of a method for processing multi-terminal conference communication according to the present invention;
FIG. 5 is a schematic flowchart of Embodiment 5 of a method for processing multi-terminal conference communication according to the present invention;
FIG. 6 is a schematic structural diagram of Embodiment 1 of an apparatus for processing multi-terminal conference communication according to the present invention;
FIG. 7 is a schematic structural diagram of Embodiment 2 of an apparatus for processing multi-terminal conference communication according to the present invention;
FIG. 8 is a schematic structural diagram of Embodiment 3 of an apparatus for processing multi-terminal conference communication according to the present invention; and
FIG. 9 is a schematic structural diagram of Embodiment 4 of an apparatus for processing multi-terminal conference communication according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

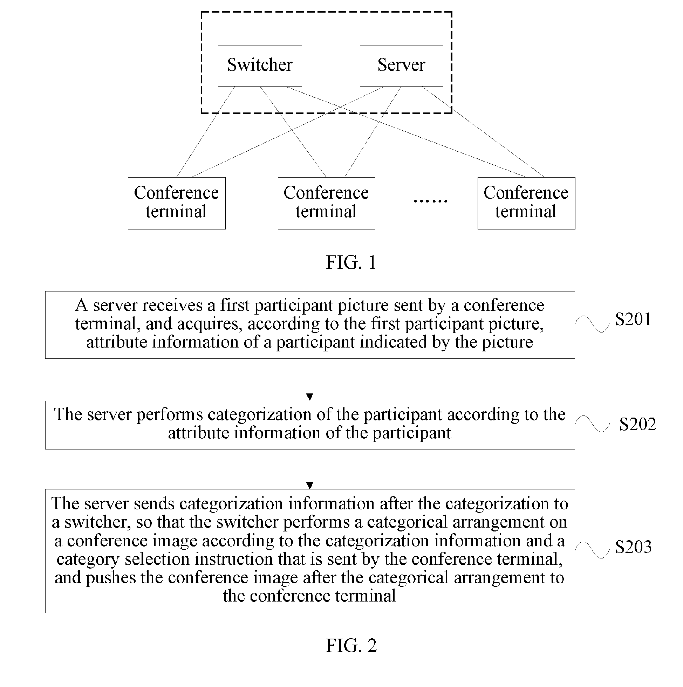

FIG. 1 is a schematic diagram of a scenario of Embodiment 1 of a method for processing multi-terminal conference communication according to the present invention. As shown in FIG. 1, the scenario in which this embodiment of the present invention is applied may include: a switcher, a server, and multiple conference terminals.

The switcher may be integrated in the server, or may be an independent device, and as a control side of a conference, the switcher and the server can communicate with multiple conference terminals that access the conference. These conference terminals may be in different regions, and may be conference terminals shared by multiple persons, or may be conference terminals used independently by a single person.

The switcher is mainly configured to process video images uploaded by the conference terminals, and perform, according to instruction information sent by the conference terminals, processing such as combining and switching of received images uploaded by the conference terminals. The server mainly receives identity authentication information sent by the conference terminals, and performs matching between the identity authentication information and the images sent by the switcher.

In this embodiment of the present invention, a picture generally refers to a static picture, and an image generally refers to a video image.

FIG. 2 is a schematic flowchart of Embodiment 2 of a method for processing multi-terminal conference communication according to the present invention. As shown in FIG. 2, the method includes:
S201: A server receives a first participant picture sent by a conference terminal, and acquires, according to the first participant picture, attribute information of a participant indicated by the picture. If the attribute information of the participant is not acquired, the participant may manually enter the attribute information by using the conference terminal, and transmit the attribute information to the server.
S202: The server performs categorization on the participant according to the attribute information of the participant.

In a specific implementation process, the attribute information may be classified into multiple parallel categories, for example, the attribute information may include: first-category information, second-category information, and third-category information, where the first-category information indicates a department to which the participant belongs, the second-category information indicates a position level of the participant, and the third-category information indicates a job of the participant. When the server performs the categorization, grouping according to the first-category information refers to that participants in a same department are in a group; grouping according to the second-category information refers to that participants at a same position level are in a group; and grouping according to the third-category information refers to that participants in a same job are in one group. However, the present invention is not limited thereto.
S203: The server sends categorization information after the categorization to a switcher, so that the switcher performs a categorical arrangement on a conference image according to the categorization information and a category selection instruction that is sent by the conference terminal, and pushes the conference image after the categorical arrangement to the conference terminal. The conference image may include images uploaded by multiple conference terminals. The multiple conference terminals may be all conference terminals that access a conference, and images uploaded by these conference terminals may be single-person images, or may be multi-person images. If the images are all single-person video images, the switcher directly performs a categorical arrangement; if the images include multi-person images, the switcher first splits a multi-person video image into multiple single-person images, and then performs the categorical arrangement.

It should be noted that, on a conference terminal side, if multiple persons share one conference terminal, to acquire a single-person image, multiple cameras may be deployed on one conference terminal so that each camera identifies one human face to perform video recording, or one camera may be shared, and an image is transmitted to the switcher and then split.

Specifically, it is assumed that, as described in the foregoing example, attribute information categories preset by a current conference system include the first-category information, the second-category information, and the third-category information. After the conference terminals connect to the conference system, display arrangement selection buttons for the first-category information, the second-category information, and the third-category information that appear on a display interface of a display device can be seen, and a participant may trigger the selection button by using a conference terminal used by the participant, to select a categorical arrangement manner on the current display interface according to a need of the participant.

For example, in this conference, there are six participants A, B, C, D, E, and F, where A and B are in Shanghai, C and D are in Shenzhen, and E and F are in Beijing. After the conference begins, the switcher acquires independent video images of the six participants A, B, C, D, E, and F, after receiving video images uploaded by conference terminals. If the switcher does not receive any category selection instruction sent by the conference terminals, the switcher pushes the images to the terminals in a default display arrangement manner. Generally, the images are displayed and arranged according to geographical locations, that is, the six participants A, B, C, D, E, and F are displayed on all the terminals, where A and B are in a same group, C and D are in a same group, and E and F are in a same group. After the conference begins, there are three display arrangement selection buttons: (1) displaying according to departments; (2) displaying according to position levels; and (3) displaying according to jobs. Assuming that a sales department speaks in a phase, where B and E belong to the sales department, another participant may select "displaying according to departments" from the display arrangement selection buttons on a display interface of a conference terminal. If C selects "displaying according to departments" on the conference terminal of C, the switcher, after receiving a category selection instruction sent by the conference terminal used by C, performs a categorical arrangement on the image again according to the selection instruction, and pushes the image after the part-based categorical arrangement to the conference terminal used by C; in this case, C can see on the conference terminal of C that B and E are in a same group, but are not separated far from each other as in the prior art. It is assumed that both A and D are members of a research and development department and both C and F are members of a channel department; in this case, on the display interface, A and D are displayed in a same group, and C and F are displayed in a same group. In this way, when the sales department presents a relevant issue, both B and E may speak, and other participants can focus on them more easily. During specific operation, a screen for the group of B and E may further be clicked on the conference terminal, so that only B and E are displayed on the display interface.

In this embodiment, a server receives a first participant picture sent by a conference terminal, and acquires, according to the picture, attribute information of a participant indicated by the picture; in this way, the server may perform categorization on the participant according to the attribute information, and after receiving categorization information, a switcher may perform a categorical arrangement on a conference image according to a selection of the conference terminal, and push the conference image after the categorical arrangement to the conference terminal. In this way, in a conference process, participants can be displayed in different categories according to a requirement of the conference terminal, and each participant can flexibly select an image arrangement manner according to a requirement, so that a video conference is implemented in a more user-friendly manner, thereby making the multi-terminal video conference more flexible, improving experience of the participants, and further improving conference quality.

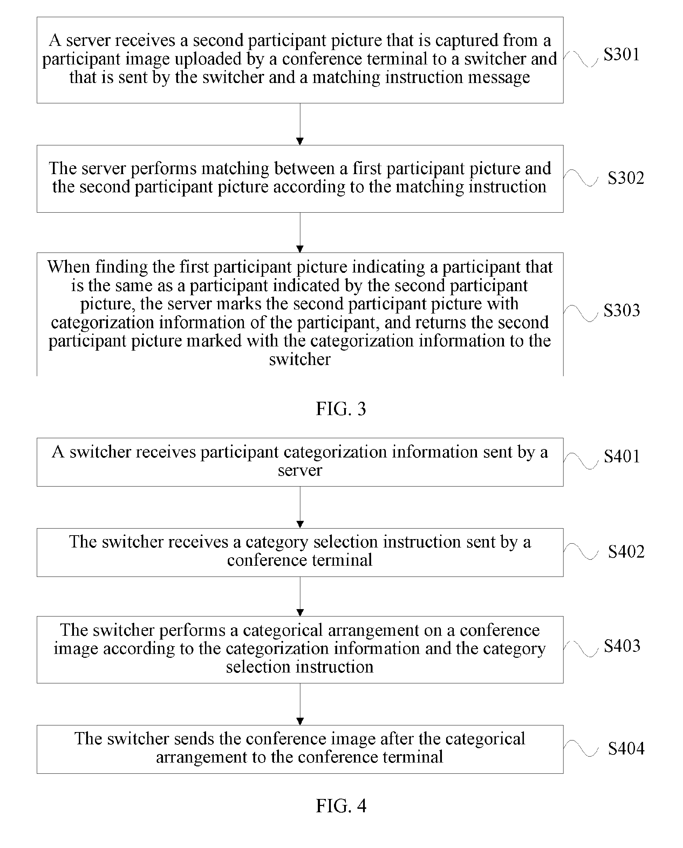

FIG. 3 is a schematic flowchart of Embodiment 3 of a method for processing multi-terminal conference communication according to the present invention. As shown in FIG. 3, the sending, by the server, information after the categorization to a switcher specifically includes:
S301: The server receives a second participant picture that is captured from a participant image uploaded by the conference terminal to the switcher and that is sent by the switcher and a matching instruction message.

Conference terminals acquire video images of participants by using respective camera apparatuses, for example, cameras, and upload the video images to the switcher. When receiving an image sent by a conference terminal, the switcher acquires an independent image of each participant by means of human face identification, captures a picture from the independent image of the participant, that is, captures a second participant picture, sends the second participant picture to the server, and also sends a matching instruction message to the server, to instruct the server to perform matching between the first participant picture sent by the conference terminal to the server and the second participant picture.
S302: The server performs matching between the first participant picture and the second participant picture according to the matching instruction. That is, from first participant pictures uploaded by the conference terminals, a first participant picture on which a participant is the same as the participant on the second participant picture is found by matching.

After acquiring the second participant picture, the server performs image collection and human face identification preprocessing on a human face that appears on the picture, and compares the picture with each of the first participant pictures previously uploaded by the conference terminals, to determine whether the participants on the two pictures are the same. If no corresponding participant can be found for the participant on the second participant picture, the server sends an instruction for reacquiring identity information to the conference terminals. In this case, the conference terminals may receive participant information manually entered by the participants, where the entered information includes participant attribute information; and then the conference terminals transmit the information to the server.
S303: When finding the first participant picture indicating a participant that is the same as a participant indicated by the second participant picture, the server marks the second participant picture with the categorization information of the participant, and returns the second participant picture marked with the categorization information to the switcher.

The categorization information is the categorization information that the server previously obtains by performing categorization after acquiring the attribute information according to the first participant picture. Specifically, the server may assign one serial number to a same category of information, for marking. For example, the participants A and B have the same first-category information, that is, belong to the same department; in this case, the first-category information of the participants A and B may both be marked with a code a, so that after the mark code is sent to the switcher, the switcher can identify, according to the code, that the participants A and B have the same first-category information, and accordingly, the participants A and B are arranged in a same group when arrangement is displayed according to the first-category information. By analogy, second-category information, third-category information, and the like, of a participant may be marked with other symbols.

Further, the receiving, by a server, a first participant picture sent by a conference terminal may specifically include two cases: (1) the server receive the first participant picture that is acquired by the conference terminal by using a camera apparatus and is sent by the conference terminal; and (2) the server receives the first participant picture that is acquired by the conference terminal according to participant identity identification information and that is sent by the conference terminal.

More specifically, the receiving, by a server, a first participant picture sent by a conference terminal, and acquiring, according to the first participant picture, attribute information of a participant indicated by the picture is specifically: performing, by the server, participant identity verification according to the first participant picture, and then acquiring, by the server according to a participant identity verification result, the attribute information of the participant indicated by the picture. That is, after confirming an identity of a participant, the server can find various information about the participant from a pre-stored database, so as to acquire all attribute information of the participant from the database.

The first participant picture may be included in identity authentication information. To connect to the conference system, the conference terminals first need to pass identity authentication. In the foregoing case (1), after running the conference system, each of the conference terminals automatically controls the camera apparatus of the conference terminal to adjust its angle and direction, to acquire a human face image within a shooting range, where a biometric authentication technology may be preset in the camera apparatus, so that the camera apparatus can automatically locate a human face, take a static picture of the human face, perform image collection and human face identification preprocessing on the human face in the static picture, and upload a preprocessed picture as the first participant picture to the server for identity confirmation; and the server performs identity confirmation on a participant on the picture according to pre-stored data, and searches for all information corresponding to the participant, including various attribute information. In the foregoing case (2), an identity identification apparatus is preset in each of the conference terminals; after the conference terminals run the conference system, the participants perform authentication in the identity identification apparatus by entering authentication information such as a command, an account, and a password; and after the authentication succeeds, the identity identification apparatus acquires, from pre-stored information according to the authentication information, a participant picture corresponding to the authentication information, and sends the participant picture as the first participant picture to the server. It should be noted that, if multiple persons share one conference terminal, the identity authentication needs to be performed on all these participants.

FIG. 4 is a schematic flowchart of Embodiment 4 of a method for processing multi-terminal conference communication according to the present invention. On the basis of the foregoing embodiments, as shown in FIG. 4, the method includes:
S401: A switcher receives participant categorization information sent by a server, that is, categorization information obtained after the server performs categorization according to different attribute information of participants.
S402: The switcher receives a category selection instruction sent by a conference terminal. Any conference terminal accessing the conference may select a categorical arrangement manner on a display interface of the conference terminal according to a need of the conference terminal, and send a category selection instruction to the switcher.
S403: The switcher performs a categorical arrangement on a conference image according to the categorization information and the category selection instruction, where the conference image may include images uploaded by multiple conference terminals.
S404: The switcher sends the conference image after the categorical arrangement to the conference terminal, that is, pushes the conference image after the categorical arrangement to the conference terminal that sends the category selection instruction.

For a specific implementation method, refer to the foregoing method embodiments, and details are not described herein again.

In this embodiment, after receiving, according to categorization information sent by a server, a category selection instruction sent by a conference terminal, a switcher may perform a categorical arrangement on a conference image again according to the instruction, and, push the conference image after the categorical arrangement to the conference terminal according to a requirement of a participant. In a conference process, the distribution and arrangement of images on a display interface can be flexibly adjusted according to a selection of the participant on the conference terminal, so that a video conference is implemented in a more user-friendly manner, thereby making the multi-terminal video conference more flexible, improving experience of the participants, and further improving conference quality.

Further, the switcher receives an image uploaded by the conference terminal. Specifically, the switcher may receive images uploaded by all conference terminals that access the conference. Generally, the conference terminals acquire participant video images in real time by using camera apparatuses, and upload the participant video images to the switcher in real time. If a received image is a video image that includes multiple participants, the switcher splits the image into an independent image of each participant.

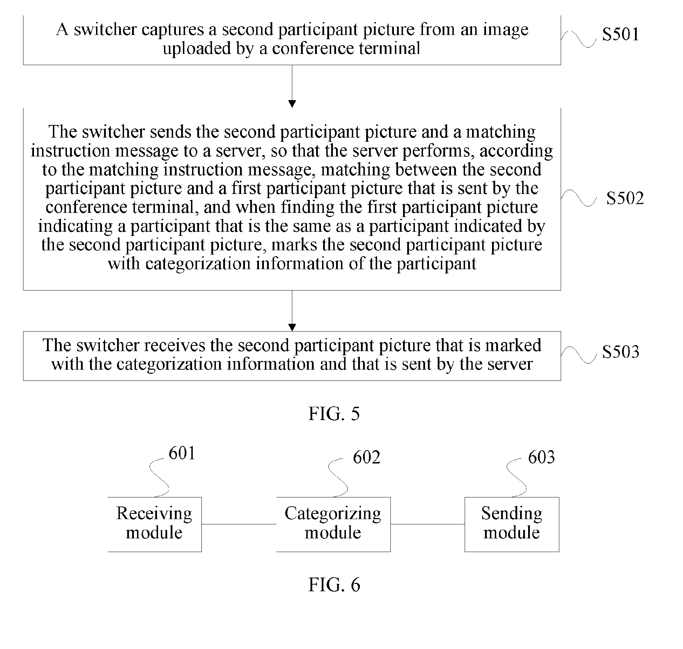

FIG. 5 is a schematic flowchart of Embodiment 5 of a method for processing multi-terminal conference communication according to the present invention. On the basis of the foregoing embodiments, the receiving, by a switcher, participant categorization information sent by a server includes:
S501: The switcher captures a second participant picture from the image uploaded by the conference terminal.
S502: The switcher sends the second participant picture and a matching instruction message to the server, so that the server performs, according to the matching instruction message, matching between the second participant picture and the first participant picture that is sent by the conference terminal, and when finding the first participant picture indicating a participant that is the same as a participant indicated by the second participant picture, marks the second participant picture with the categorization information of the participant.

If no first participant picture corresponding to the same participant is found for the second participant picture, the switcher sends an instruction for reacquiring identity information to all conference terminals that access the conference.
S503: The switcher receives the second participant picture that is marked with the categorization information and that is sent by the server.

Further, after S503, the switcher may further mark the second participant picture marked with the categorization information with a source address of the second participant picture, which is a source address of the corresponding image from which the second participant picture is captured, that is, an address of the conference terminal that sends the image.

On the basis of the foregoing embodiments, this embodiment of the present invention may further be applied in a one-to-one conference. Specifically, the switcher receives a single-conference-object selection instruction sent by a conference terminal, where the single-conference-object selection instruction is used to request a conference with a single specified participant; and the switcher pushes an image of the specified participant to the conference terminal according to the single-conference-object selection instruction. Assuming that four participants A, B, C, and D participate in a video conference, during which A needs to separately discuss with D, A may select, by using a display interface of a conference terminal used by A, a button that represents D, to trigger the conference terminal to send a single-conference-object selection instruction to the switcher, so as to request a separate conference with D; and the switcher pushes, according to the request, an image of D to the conference terminal used by A, and then A can see only D on the interface, and conference with D. In this way, flexibility of the whole conference process is improved.

FIG. 6 is a schematic structural diagram of Embodiment 1 of an apparatus for processing multi-terminal conference communication according to the present invention. The apparatus may be integrated in a server, where the server may be a conference server. As shown in FIG. 6, the apparatus includes: a receiving module 601, a categorizing module 602, and a sending module 603, where:
the receiving module 601 is configured to receive a first participant picture sent by a conference terminal, and acquire, according to the first participant picture, attribute information of a participant indicated by the picture; the categorizing module 602 is configured to perform categorization on the participant according to the attribute information of the participant; and the sending module 603 is configured to send categorization information after the categorization to a switcher, so that the switcher performs a categorical arrangement on a conference image according to the categorization information and a category selection instruction that is sent by the conference terminal, and pushes the image after the categorical arrangement to the conference terminal, where the conference image includes images uploaded by multiple conference terminals.

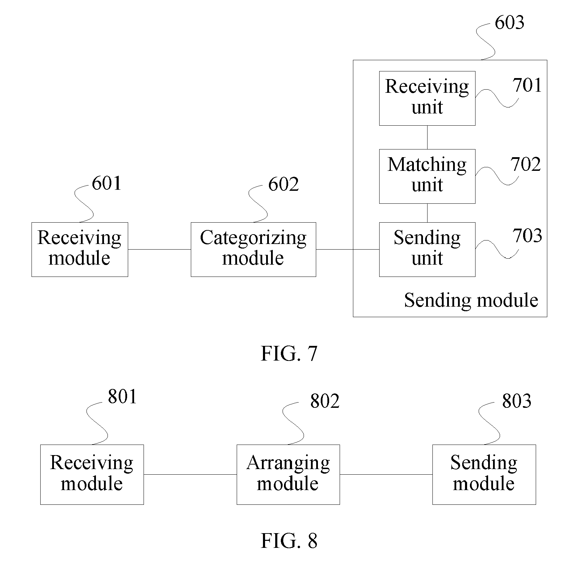

FIG. 7 is a schematic structural diagram of Embodiment 2 of an apparatus for processing multi-terminal conference communication according to the present invention. On the basis of FIG. 6, as shown in FIG. 7, the sending module 603 includes: a receiving unit 701, a matching unit 702, and a sending unit 703, where:
the receiving unit 701 is configured to receive a second participant picture that is captured from a participant image uploaded by the conference terminal to the switcher and that is sent by the switcher and a matching instruction message; the matching unit 702 is configured to perform matching between the first participant picture and the second participant picture according to the matching instruction; and the sending unit 703 is configured to: when the first participant picture indicating a participant that is the same as a participant indicated by the second participant picture is found, mark the second participant picture with the categorization information of the participant, and return the second participant picture marked with the categorization information to the switcher.

Further, on the basis of the foregoing embodiment, the receiving module 601 is specifically configured to receive the first participant picture that is acquired by the conference terminal by using a camera apparatus and that is sent by the conference terminal.

Alternatively, the receiving module 601 is specifically configured to receive the first participant picture that is acquired by the conference terminal according to participant identity identification information and that is sent by the conference terminal.

On the basis of the foregoing embodiment, the receiving module 601 is specifically configured to perform participant identity verification according to the first participant picture; and acquire, according to a participant identity verification result, the attribute information of the participant indicated by the picture.

The foregoing apparatus is configured to execute the foregoing method embodiments. The implementation principle and technical effect of the apparatus are similar to those of the foregoing method embodiments, and details are not described herein again.

FIG. 8 is a schematic structural diagram of Embodiment 3 of an apparatus for processing multi-terminal conference communication according to the present invention. The apparatus may be integrated in a switcher. As shown in FIG. 8, the apparatus includes a receiving module 801, an arranging module 802, and a sending module 803, where:
the receiving module 801 is configured to receive participant categorization information sent by a server; and receive a category selection instruction sent by a conference terminal; the arranging module 802 is configured to perform a categorical arrangement on a conference image according to the categorization information and the category selection instruction, where the conference image includes images uploaded by multiple conference terminals; and the sending module 803 is configured to push the image after the categorical arrangement to the conference terminal.

Further, the receiving module 801 is further configured to receive an image uploaded by the conference terminal.

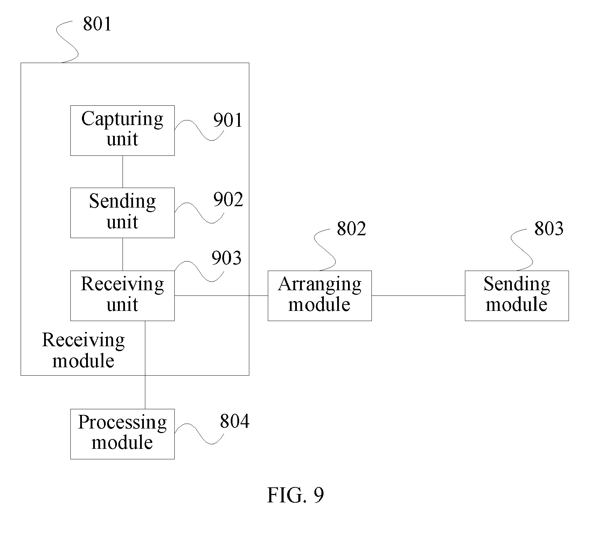

FIG. 9 is a schematic structural diagram of Embodiment 4 of an apparatus for processing multi-terminal conference communication according to the present invention. On the basis of FIG. 8, as shown in FIG. 9, the receiving module 801 includes: a capturing unit 901, a sending unit 902, and a receiving unit 903, where:
the capturing module 901 is configured to capture a second participant picture from the image uploaded by the conference terminal; the sending unit 902 is configured to send the second participant picture and a matching instruction message to the server, so that the server performs, according to the matching instruction message, matching between the second participant picture and the first participant picture that is sent by the conference terminal, and when finding the first participant picture indicating a participant that is the same as a participant indicated by the second participant picture, marks the second participant picture with the categorization information of the participant; and the receiving unit 903 is configured to receive the second participant picture that is marked with the categorization information and that is sent by the server.

As shown in FIG. 9, on the basis of the foregoing embodiments, the apparatus further includes: a processing module 804, configured to mark the second participant picture marked with the categorization information with a source address of the second participant picture.

Further, the receiving module 801 is further configured to receive a single-conference-object selection instruction sent by the conference terminal, where the single-conference-object selection instruction is used to request a conference with a single specified participant; and the sending module 803 is further configured to push an image of the specified participant to the conference terminal according to the single-conference-object selection instruction.

The foregoing apparatus is configured to execute the foregoing method embodiments. The implementation principle and technical effect of the apparatus are similar to those of the foregoing method embodiments, and details are not described herein again.

An embodiment of the present invention further provides another apparatus for processing multi-terminal conference communication. The apparatus is integrated in the server, and includes: a receiver, a processor, and a sender, where:
the receiver is configured to receive a first participant picture sent by a conference terminal, and acquire, according to the first participant picture, attribute information of a participant indicated by the picture; the processor is configured to perform categorization on the participant according to the attribute information of the participant; and the sender is configured to send categorization information after the categorization to a switcher, so that the switcher performs a categorical arrangement on a conference image according to the categorization information and a category selection instruction that is sent by the conference terminal, and pushes the image after the categorical arrangement to the conference terminal, where the conference image includes images uploaded by multiple conference terminals.

The sender may be specifically configured to receive a second participant picture that is captured from a participant image uploaded by the conference terminal to the switcher and that is sent by the switcher and a matching instruction message; perform matching between the first participant picture and the second participant picture according to the matching instruction; and when the first participant picture indicating a participant that is the same as a participant indicated by the second participant picture is found, mark the second participant picture with the categorization information of the participant, and return the second participant picture marked with the categorization information to the switcher.

The receiver is specifically configured to receive the first participant picture that is acquired by the conference terminal by using a camera apparatus and that is sent by the conference terminal. Alternatively, the receiver is specifically configured to receive the first participant picture that is acquired by the conference terminal according to participant identity identification information and that is sent by the conference terminal.

Further, the receiver is specifically configured to perform participant identity verification according to the first participant picture; and acquire, according to a participant identity verification result, the attribute information of the participant indicated by the picture.

An embodiment of the present invention further provides another apparatus for processing multi-terminal conference communication. The apparatus is integrated in the switcher, and includes: a receiver, a processor, and a sender, where the receiver is configured to receive participant categorization information sent by a server; and receive a category selection instruction sent by a conference terminal; the processor is configured to perform a categorical arrangement on a conference image according to the categorization information and the category selection instruction, where the conference image includes images uploaded by multiple conference terminals; and the sender is configured to push the image after the categorical arrangement to the conference terminal.

Further, the receiver is further configured to receive an image uploaded by the conference terminal.

The receiver is specifically configured to capture a second participant picture from the image uploaded by the conference terminal; send the second participant picture and a matching instruction message to the server, so that the server performs, according to the matching instruction message, matching between the second participant picture and the first participant picture that is sent by the conference terminal, and when finding the first participant picture indicating a participant that is the same as a participant indicated by the second participant picture, marks the second participant picture with the categorization information of the participant; and receive the second participant picture that is marked with the categorization information and that is sent by the server.

The processor is further configured to mark the second participant picture marked with the categorization information with a source address of the second participant picture.

Still further, the receiver is further configured to receive a single-conference-object selection instruction sent by the conference terminal, where the single-conference-object selection instruction is used to request a conference with a single specified participant; and the sender is further configured to push an image of the specified participant to the conference terminal according to the single-conference-object selection instruction.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for processing multi-terminal conference communication, comprising:
receiving, by a server, a first participant picture sent by a conference terminal, and acquiring, according to the first participant picture, attribute information of a participant indicated by the picture;
performing, by the server, categorization on the participant according to the attribute information of the participant; and
sending, by the server, categorization information after the categorization to a switcher, so that the switcher performs a categorical arrangement on a conference image according to the categorization information and a category selection instruction that is sent by the conference terminal, and pushes the image after the categorical arrangement to the conference terminal, wherein the conference image comprises images uploaded by multiple conference terminals.

2. The method according to claim 1, wherein the sending, by the server, categorization information after the categorization to a switcher comprises:
receiving, by the server, a second participant picture that is captured from a participant image uploaded by the conference terminal to the switcher and that is sent by the switcher and a matching instruction message;
performing, by the server, matching between the first participant picture and the second participant picture according to the matching instruction; and
when finding the first participant picture indicating a participant that is the same as a participant indicated by the second participant picture, marking, by the server, the second participant picture with the categorization information of the participant, and returning the second participant picture marked with the categorization information to the switcher.

3. The method according to claim 2, wherein the receiving, by a server, a first participant picture sent by a conference terminal comprises:
receiving, by the server, the first participant picture that is acquired by the conference terminal by using a camera apparatus and that is sent by the conference terminal.

4. The method according to claim 2, wherein the receiving, by a server, a first participant picture sent by a conference terminal comprises:
receiving, by the server, the first participant picture that is acquired by the conference terminal according to participant identity identification information and that is sent by the conference terminal.

5. The method according to claim 3 or 4, wherein the receiving, by a server, a first participant picture sent by a conference terminal, and acquiring, according to the first participant picture, attribute information of a participant indicated by the picture comprises:
performing, by the server, participant identity verification according to the first participant picture; and
acquiring, by the server according to a participant identity verification result, the attribute information of the participant indicated by the picture.

6. A method for processing multi-terminal conference communication, comprising:
receiving, by a switcher, participant categorization information sent by a server;
receiving, by the switcher, a category selection instruction sent by a conference terminal;
performing, by the switcher, a categorical arrangement on a conference image according to the categorization information and the category selection instruction, wherein the conference image comprises images uploaded by multiple conference terminals; and
pushing, by the switcher, the image after the categorical arrangement to the conference terminal.

7. The method according to claim 6, further comprising:
receiving, by the switcher, an image uploaded by the conference terminal.

8. The method according to claim 7, wherein the receiving, by a switcher, participant categorization information sent by a server comprises:
capturing, by the switcher, a second participant picture from the image uploaded by the conference terminal;
sending, by the switcher, the second participant picture and a matching instruction message to the server, so that the server performs, according to the matching instruction message, matching between the second participant picture and the first participant picture that is sent by the conference terminal, and when finding the first participant picture indicating a participant that is the same as a participant indicated by the second participant picture, marks the second participant picture with the categorization information of the participant; and
receiving, by the switcher, the second participant picture that is marked with the categorization information and that is sent by the server.

9. The method according to claim 8, wherein after the receiving, by the switcher, the second participant picture that is marked with the categorization information and that is sent by the server, the method further comprises:
marking, by the switcher, the second participant picture marked with the categorization information with a source address of the second participant picture.

10. The method according to claim 6, further comprising:
receiving, by the switcher, a single-conference-object selection instruction sent by the conference terminal, wherein the single-conference-object selection instruction is used to request a conference with a single specified participant; and
pushing, by the switcher, an image of the specified participant to the conference terminal according to the single-conference-object selection instruction.

11. An apparatus for processing multi-terminal conference communication, comprising:
a receiving module, configured to receive a first participant picture sent by a conference terminal, and acquire, according to the first participant picture, attribute information of a participant indicated by the picture;
a categorizing module, configured to perform categorization on the participant according to the attribute information of the participant; and
a sending module, configured to send categorization information after the categorization to a switcher, so that the switcher performs a categorical arrangement on a conference image according to the categorization information and a category selection instruction that is sent by the conference terminal, and pushes the image after the categorical arrangement to the conference terminal, wherein the conference image comprises images uploaded by multiple conference terminals.

12. The apparatus according to claim 11, wherein the sending module comprises:
a receiving unit, configured to receive a second participant picture that is captured from a participant image uploaded by the conference terminal to the switcher and that is sent by the switcher and a matching instruction message;
a matching unit, configured to perform matching between the first participant picture and the second participant picture according to the matching instruction; and
a sending unit, configured to: when the first participant picture indicating a participant that is the same as a participant indicated by the second participant picture is found, mark the second participant picture with the categorization information of the participant, and return the second participant picture marked with the categorization information to the switcher.

13. The apparatus according to claim 12, wherein the receiving module is specifically configured to receive the first participant picture that is acquired by the conference terminal by using a camera apparatus and that is sent by the conference terminal.

14. The apparatus according to claim 12, wherein the receiving module is specifically configured to receive the first participant picture that is acquired by the conference terminal according to participant identity identification information and that is sent by the conference terminal.

15. The apparatus according to claim 13 or 14, wherein the receiving module is specifically configured to perform participant identity verification according to the first participant picture; and acquire, according to a participant identity verification result, the attribute information of the participant indicated by the picture.

16. An apparatus for processing multi-terminal conference communication, comprising:
a receiving module, configured to receive participant categorization information sent by a server; and receive a category selection instruction sent by a conference terminal;
an arranging module, configured to perform a categorical arrangement on a conference image according to the categorization information and the category selection instruction, wherein the conference image comprises images uploaded by multiple conference terminals; and
a sending module, configured to push the image after the categorical arrangement to the conference terminal.

17. The apparatus according to claim 16, wherein the receiving module is further configured to receive an image uploaded by the conference terminal.

18. The apparatus according to claim 17, wherein the receiving module comprises:
a capturing unit, configured to capture a second participant picture from the image uploaded by the conference terminal;
a sending unit, configured to send the second participant picture and a matching instruction message to the server, so that the server performs, according to the matching instruction message, matching between the second participant picture and the first participant picture that is sent by the conference terminal, and when finding the first participant picture indicating a participant that is the same as a participant indicated by the second participant picture, marks the second participant picture with the categorization information of the participant; and
a receiving unit, configured to receive the second participant picture that is marked with the categorization information and that is sent by the server.

19. The apparatus according to claim 18, further comprising:
a processing module, configured to mark the second participant picture marked with the categorization information with a source address of the second participant picture.

20. The apparatus according to claim 16, wherein the receiving module is further configured to receive a single-conference-object selection instruction sent by the conference terminal, wherein the single-conference-object selection instruction is used to request a conference with a single specified participant; and
the sending module is further configured to push an image of the specified participant to the conference terminal according to the single-conference-object selection instruction.
